# EUROPEAN PATENT SPECIFICATION

(11) **EP 4 123 403 B1**
(45) Date of publication and mention of the grant of the patent: **24.04.2024**
(21) Application number: 21770864.3
(22) Date of filing: 18.03.2021
(51) Int. Cl.: G05B 23/02, G06Q 10/20, G05B 19/418, G06Q 50/04, G06F 11/07

(54) **DATA DISTRIBUTION CONTROL DEVICE, METHOD, AND PROGRAM**
VORRICHTUNG, VERFAHREN UND PROGRAMM ZUR DATENVERTEILUNGSSTEUERUNG
DISPOSITIF, PROCÉDÉ ET PROGRAMME DE COMMANDE DE DISTRIBUTION DE DONNÉES

(30) Priority: 19.03.2020 JP 2020049238
(43) Date of publication of application: 25.01.2023
(73) Proprietor: NTT Communications Corporation, Tokyo 100-8019 (JP)
(72) Inventor: TAKADA, Tomonori, Tokyo 100-8019 (JP); AKABORI, Hideaki, Tokyo 100-8019 (JP); KISHIDA, Tsunechika, Tokyo 100-8019 (JP); KOBAYASHI, Yoshihiko, Tokyo 100-8019 (JP); SUZUKI, Masataka, Tokyo 100-8019 (JP); MINAKUCHI, Tohru, Tokyo 100-8019 (JP)
(74) Representative: Nederlandsch Octrooibureau
(86) International application number: PCT/JP2021/011122
(87) International publication number: WO 2021/187564

(56) References cited:
- EP-A1- 3 309 682
- JP-A- H06 218 660
- JP-A- H06 218 660
- JP-A- 2003 032 764
- JP-A- 2003 032 764
- JP-A- 2009 053 795
- JP-A- 2009 053 795
- US-A1- 2010 100 521
- US-A1- 2019 258 233

## Description

### FIELD

Embodiments of the present invention relate to a data distribution control apparatus, a data distribution control method, and a data distribution control program for controlling data distribution from a data owner to a data user.

### BACKGROUND

For example, in a manufacturing field, there is known a system that diagnoses an operation state of a facility of a manufacturer, etc., by using a network. For example, Patent Literature 1 describes a system that performs breakdown diagnosis on a machine by transmitting data indicative of an operation state of the machine to a diagnosis center via a network and accumulating in the diagnosis center the received data indicative of the operation state. Under this type of system, at the occurrence of a breakdown in a machine, the diagnosis center can immediately detect the situation and generate an alarm, etc

US 2010/100521 A1 and EP 3 309 682 A1 relate to data collection devices which transmit diagnostics data to a device center.US 2019/258233 A1 describes creating a causal relationship between different regions in a production line.

### CITATION LIST

### PATENT LITERATURE

Jpn. Pat. Appln. KOKAI Publication No. 2019-185292

### SUMMARY

### TECHNICAL PROBLEM

Recently, there has been a growing number of cases in which such a diagnosis of a facility as described above is outsourced to an external support center without being performed by a diagnosis center operated and managed by a manufacturer. Even in the case where a manufacturer operates and manages a support center, diagnosis of some functions of a facility may be entrusted from the support center to, for example, a component manufacturer of the facility or a software vendor.

However, if the existing technique is applied as it is, data indicative of an operation state of a facility is unconditionally transmitted to the outside. This causes a risk that even confidential data relating to the manufacturing of a product, which is not necessary for the detection or diagnosis of a failure, may be leaked to the outside, and the confidentiality of the data may be lost.

The present invention has been made in view of the above circumstances, and an object of the present invention is to provide a technique that enables confidentiality of data to be maintained in the case of entrusting an analysis of an operation state of a facility to the outside.

### SOLUTION TO PROBLEM

In order to achieve the object described above, according to a first aspect of a data distribution control apparatus and a data distribution control method according to the present invention, when log data indicating an operation state of a facility including a plurality of apparatuses is transmitted to a data user via a network, time difference information in operation according to a positional relationship between the apparatuses is stored. Then, log data indicating operation states of the plurality of apparatuses is separately acquired and chronologically stored in a second storage medium, and at the occurrence of a failure in a first apparatus included in the apparatuses, an operation period of a second apparatus having an operational relevance to the first apparatus in the apparatuses, the operation period being associated with the occurrence of the failure, is estimated based on the timing of the occurrence of the failure and the time difference information in operation. Among log data indicating an operation state of the second apparatus, the log data corresponding to the estimated operation period is read as a distribution object from the second storage medium, and the read log data is transmitted to the data user via the network.

### ADVANTAGEOUS EFFECTS OF INVENTION

According to the first aspect of the present invention, for example, at the occurrence of a failure in a first apparatus within a facility, among log data of a second apparatus having a high operational relevance to the first apparatus, only a piece corresponding to an operation period associated with the occurrence of the failure is transmitted as a distribution object to a data user. This prevents, among log data generated from the second apparatus, a piece generated during a period not associated with the occurrence of the failure from being transmitted, so that the confidentiality of log data can be maintained at a high level as compared to a case in which log data corresponding to all apparatuses are unconditionally transmitted.

That is, according to one aspect of the present invention, it is possible to provide a technique that enables confidentiality of data to be maintained in a case in which analysis of an operation state of a facility is entrusted to the outside.

### BRIEF DESCRIPTION OF THE DRAWINGS

FIG. 1 is a diagram showing an overall configuration of a failure analysis support system including a production management apparatus functioning as a data distribution control apparatus according to an embodiment of the present invention.
FIG. 2 is a block diagram showing a hardware configuration of the production management apparatus shown in FIG. 1.
FIG. 3 is a block diagram showing a software configuration of the production management apparatus shown in FIG. 1.
FIG. 4 is a diagram showing an example of an inter-apparatus time difference information database provided in the production management apparatus shown in FIG. 3.
FIG. 5 is a flowchart showing a processing procedure and processing contents of data distribution control by the production management apparatus shown in FIG. 3.
FIG. 6 is a flowchart showing a first half of operation period estimation processing and data transmission control processing in the processing procedure shown in FIG. 5.
FIG. 7 is a flowchart showing a second half of operation period estimation processing and data transmission control processing in the processing procedure shown in FIG. 5.
FIG. 8 is an operation timing diagram for illustrating an example of the operation period estimation processing shown in FIG. 6 and FIG. 7.
FIG. 9 is an enlarged view of some portions of the operation timing shown in FIG. 8.

### DETAILED DESCRIPTION

Hereinafter, embodiments according to the present invention will be described with reference to the drawings.

### (Embodiment)

### (Configuration Example)

### (1) System

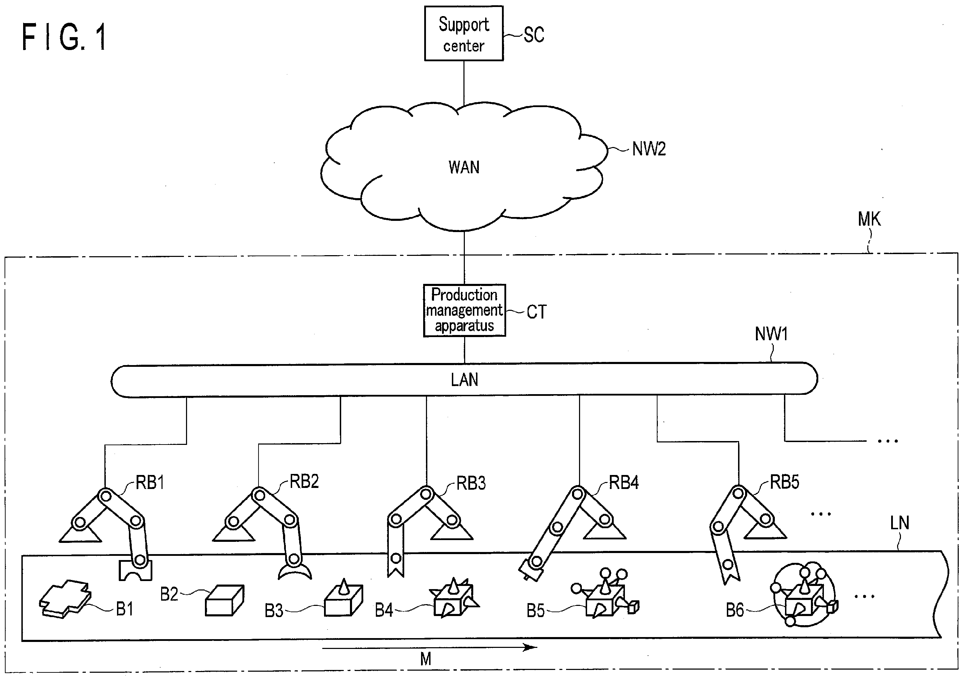

FIG. 1 is a diagram showing an overall configuration of a system including a data distribution control apparatus according to an embodiment of the present invention.

In FIG. 1, MK denotes a production facility of a set manufacturer, for example. The manufacturing facility MK includes, for example, a production line LN in which a plurality of manufacturing apparatuses RB1, RB2, ..., are arranged in a direction M in which the production line LN moves. For example, the manufacturing apparatuses RB1, RB2, ..., share and conduct work of bending and joining a plate-shaped component B1 carried in from another line or a component supplying apparatus (not illustrated), thereby forming a base B2 of a set, and sequentially attaching a plurality of components to the base B2 in stages, thereby assembling sets B3 to B6.

Each of the manufacturing apparatuses RB1, RB2, ..., includes, for example, an assembly robot, and executes a pre-designated assembling operation under the control of a manufacturing controller such as a programmable logic controller (PLC) (not illustrated). In order to control and monitor the assembling operation, the manufacturing apparatuses RB1, RB2, ..., are provided with a plurality of sensors (illustration omitted). Each of these sensors outputs sensor data indicating an operation state of a predetermined portion of each of the manufacturing apparatuses RB1, RB2, .... Sensor data output from each of the sensors is transferred to a production management apparatus CT via a local area network (LAN) NW1 established within the production facility MK.

The configuration of the production line LN, the type and number of the manufacturing apparatuses RB1, RB2, ..., the operation contents of the manufacturing apparatuses RB1, RB2,..., and the configuration of a product to be manufactured, the type and contents of operation states to be detected by the sensors, etc., may be freely selected, and the LAN is not limited to a wired LAN but may be a wireless LAN.

The production management apparatus CT is capable of communicating data with an external support center SC via a wide area network (WAN) NW2. In the event of a failure in the manufacturing apparatuses RB1, RB2, ..., the production management apparatus CT transmits sensor data of a manufacturing apparatus in which the failure has occurred and sensor data of manufacturing apparatuses arranged in the vicinity of the aforementioned manufacturing apparatus to the external support center SC via the WAN. The external support center SC executes analysis processing for estimating a cause or sign of the failure based on log data transmitted from the production management apparatus CT, and returns information indicating a result of the analysis to the production management apparatus CT serving as a request source via the WAN.

### (2) Production Management Apparatus CT

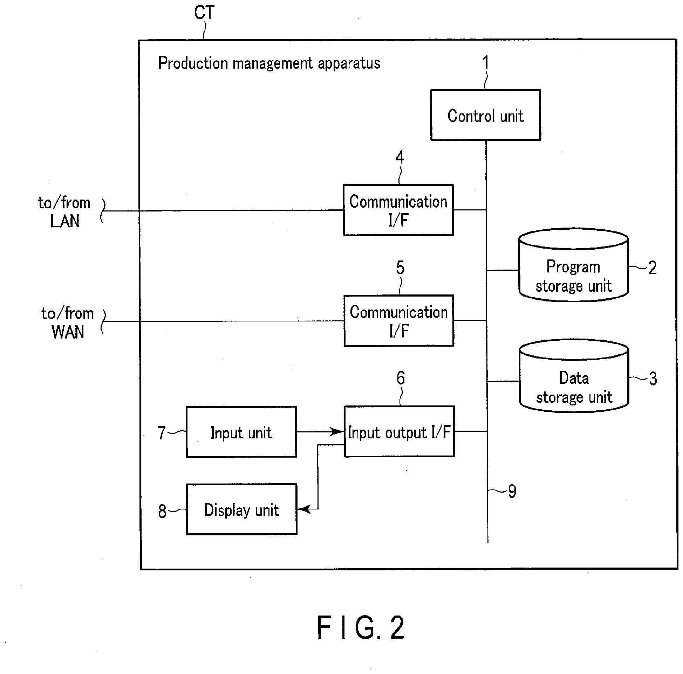

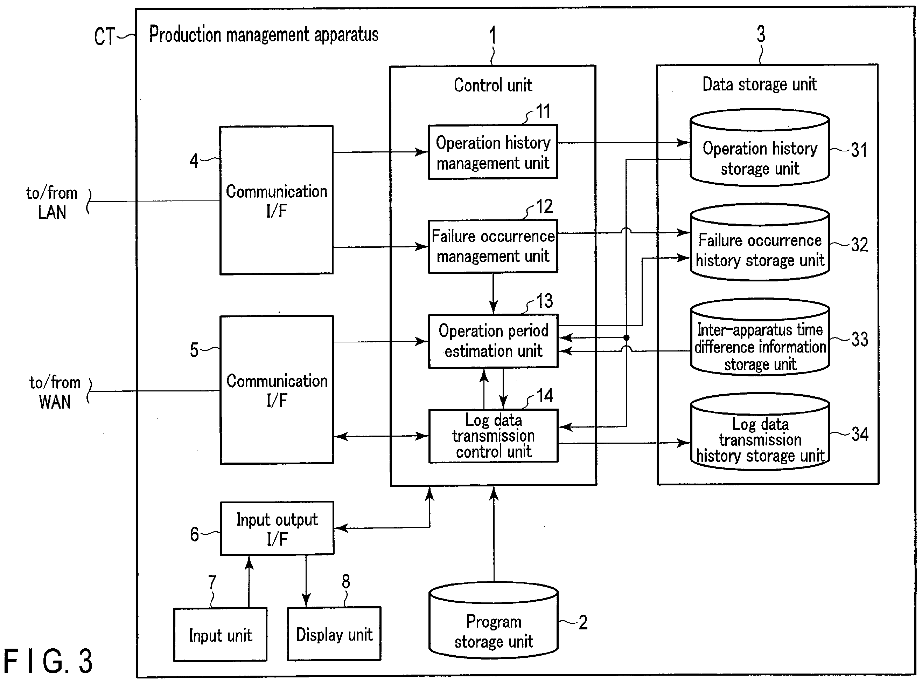

FIGS. 2 and 3 are block diagrams respectively showing a hardware configuration and a software configuration of the production management apparatus CT.

The production management apparatus CT has a function as a data distribution control apparatus according to an embodiment of the present invention, and is configured by, for example, a server computer or a personal computer. The production management apparatus CT may be installed in the production facility MK of the set manufacturer, or may be installed in the cloud or on the Web.

The production management apparatus CT includes a control unit 1 having a hardware processor such as a central processing unit (CPU), etc., to which a program storage unit 2, a data storage unit 3, communication interfaces (communication I/F) 4 and 5, and an input/output interface (input/output I/F) 6 are connected via a bus 9.

The communication I/F 4 performs data communications with a LAN under a communication protocol defined in the LAN, and under the control of the control unit 1, mainly receives sensor data and alarm data transmitted from the manufacturing apparatuses RB1, RB2, .... The communication I/F 5 performs data communications with a WAN under a communication protocol defined in the WAN, and under the control of the control unit 1, performs transmission of log data and reception of information indicating a failure analysis result to and from the external support center SC.

An input unit 7 and a display unit 8 are connected to the input/output I/F 6. The input unit 7 and the display unit 8 are used, for example, by a production manager to input various types of setting information to the production management apparatus CT and to display, at the occurrence of a failure, alarm information of the event and an analysis result of the failure.

The program memory 2 uses, for example, as a main storage medium, a nonvolatile memory such as a hard disk drive (HDD) or a solid state drive (SSD), which allows writing and reading at any time, and a storage area of the program storage unit 2 stores, in addition to middlewear such as an operating system (OS), programs for executing various types of processing according to an embodiment of the present invention. The storage medium may be configured by the aforementioned HDD or SSD in combination with a read only memory (ROM).

The data storage unit 3 is, for example, a combination of an HDD or an SSD and a random access memory (RAM), and a storage area of the data storage unit 3 is provided with an operation history storage unit 31, a failure occurrence history storage unit 32, an inter-apparatus time difference information storage unit 33, and a log data transmission history storage unit 34, which are used in an embodiment of the present invention.

The operation history storage unit 31 is used to store sensor data which are chronologically output from each of the sensors of the manufacturing apparatuses RB1, RB2, ..., and each of which indicates an operation state of a corresponding apparatus, together with an occurrence time or reception time and IDs of a manufacturing apparatus, which is a generation source, and a corresponding sensor.

For each of the manufacturing apparatuses RB1, RB2, ..., the failure occurrence history storage unit 32 stores a piece of alarm data generated from a corresponding sensor together with an alarm occurrence time and IDs of a manufacturing apparatus, which is an alarm generation source, and a corresponding sensor. The failure occurrence history storage unit 32 also stores information indicating a failure analysis result that has been returned from the external support center SC.

The inter-apparatus time difference information storage unit 33 stores information on a time difference in operation between the manufacturing apparatuses RB1, RB2, .... An example of the inter-apparatus time difference information will be described later.

The log data transmission history storage unit 34 is used to store information indicating a transmission history of log data transmitted to the external support center SC.

The control unit 1 includes, as processing functions according to an embodiment of the present invention, an operation history management unit 11, a failure occurrence management unit 12, an operation period estimation unit 13, and a log data transmission control unit 14. Each of the processing units 11 to 14 is realized by causing a hardware processor of the control unit 1 to execute a program stored in the program storage unit 2.

The operation history management unit 11 receives, via the communication I/F 4, sensor data each of which indicates an operation state of an apparatus and which are chronologically output from the sensors for each of the manufacturing apparatuses RB1, RB2, .... Subsequently, each of the received sensor data is associated with an occurrence time or a reception time of a corresponding received piece of the sensor data with an ID of a manufacturing apparatus serving as a data generation source and an ID of a corresponding sensor, and is then stored, as log data indicating an operation state of each of the manufacturing apparatuses RB1, RB2, ..., in the operation history storage unit 31.

For each of the manufacturing apparatuses RB1, RB2, ..., the creating management unit 12 receives, via the communication I/F 4, alarm data from sensors of the manufacturing apparatuses RB1, RB2, .... The failure occurrence management unit 12 performs the processing of: determining, based on the received alarm data, a manufacturing apparatus serving as a failure occurrence source; and storing, in the failure occurrence history storage unit 32, an ID of the manufacturing apparatus determined to be the failure occurrence source, together with an alarm occurrence time and an ID of a sensor serving as an alarm generation source. Failures include an operation state indicating a sign of a failure. Furthermore, the type of failure may be estimated from the type of alarm.

At the occurrence of a failure (including signs of failure) in the manufacturing apparatuses RB1, RB2, ..., the operation period estimation unit 13 estimates, based on an occurrence timing of the failure and information indicating a time difference in operation between the apparatuses stored in the inter-apparatus time difference information storage unit 33, an operation period relating to the failure in each of the manufacturing apparatuses located in the periphery of the manufacturing apparatus in which the failure has occurred. The operation period estimation unit 13 further divides the estimated operation period into a plurality of time ranges and sequentially selects the divided time ranges in descending order of the degree of relevance to the failure occurrence.

The operation period estimation unit 13 further performs processing of: receiving, via the communication I/F 5, information indicating a failure analysis result that has been returned from the external support center SC after transmission of the log data; and storing the received information in the failure occurrence history storage unit 32.

The log data transmission control unit 14 performs processing of reading, from the operation history storage unit 31, a piece of sensor data generated from the manufacturing apparatus in which the failure has occurred, and transmitting the read log data from the communication I/F 5 to the external support center SC. At the same time, among the log data respectively generated from the manufacturing apparatuses located at the periphery of the manufacturing apparatus in which the failure has occurred, the log data transmission control unit 14 reads, from the operation history storage unit 31, a piece of sensor data corresponding to the operation period estimated by the operation period estimation unit 13, for each of the divided time ranges. The log data transmission control unit 14 then performs processing of sequentially transmitting the read log data in a stepwise manner from the communication I/F 5 to the external support center SC.

At a predetermined timing after transmitting the log data, the log data transmission control unit 14 performs processing of transmitting log data erasure request from the communication I/F 5 to the external support center SC serving as log data transmission destination.

### (Operation Example)

Next, an operation example of the apparatus configured as described above will be described.

### (1) Setting of Inter-apparatus Time Difference Information

Before the system starts to operate, processing for setting information indicating a time difference in operation between an apparatus concerned and its peripheral apparatuses is performed for each of the apparatuses RB1, RB2, .... This inter-apparatus time difference information is set based on an operation schedule, etc., of a production line by a production manager inputting necessary data to the input unit 7. Under the control of the control unit 1, the production management apparatus CT captures, via the input/output I/F 6, the aforementioned data input to the input unit 7 and stores the data in the inter-apparatus time difference information storage unit 33, thereby generating inter-apparatus time difference information.

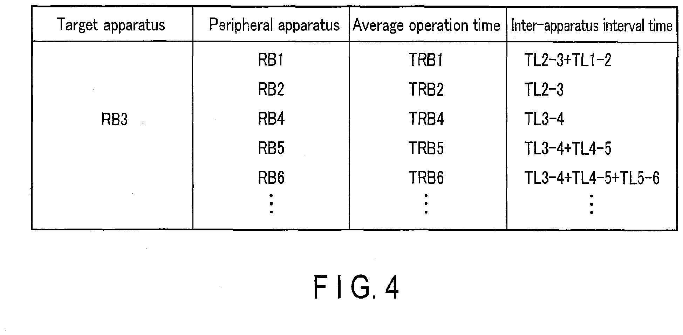

FIG. 4 shows an example of inter-apparatus time difference information. This example shows inter-apparatus time difference information of peripheral apparatuses RB1, RB2, RB4, RB5, ..., with respect to the manufacturing apparatus RB3. That is, a piece of inter-apparatus time difference information includes an average operation time (work time of one cycle) TRB1, TRB2, ..., during which a corresponding one of the manufacturing apparatuses RB1, RB2, ..., operates with respect to a product, and an interval time TL between adjacent manufacturing apparatuses on the production line LN.

The work times TRB1, TRB2, ... of one cycle of the manufacturing apparatuses RB1, RB2, ... differ from each other depending on the work content of each of the manufacturing apparatus RB1, RB2, .... Furthermore, the interval time TL indicates a time from when one of the two adjacent manufacturing apparatuses on the production line LN, which is located on the upstream side, completes assembling or processing work of one cycle with respect to a product to when the product is conveyed along a conveyance path to the other manufacturing apparatus on the downstream side and the other manufacturing apparatus starts its assembling or processing work of one cycle with respect to the product. The interval time TL is determined based on a distance between two adjacent manufacturing apparatuses on the production line LN, a conveyance speed of a product by the conveyance path, etc., and a value set to the interval time TL is different between the manufacturing apparatuses.

As a peripheral apparatus, all of the manufacturing apparatuses on the production line LN other than an apparatus concerned may be defined or only peripheral apparatuses having an operational relevance to the apparatus concerned may be defined. If a peripheral apparatus having an operational relevance is located on the upstream side, for example, an apparatus concerned may be affected by a failure in this peripheral apparatus on the upstream side. If a peripheral apparatus having an operational relevance is located on the downstream side, this peripheral apparatus may be affected by a failure in the apparatus concerned.

### (2) Data Distribution Control

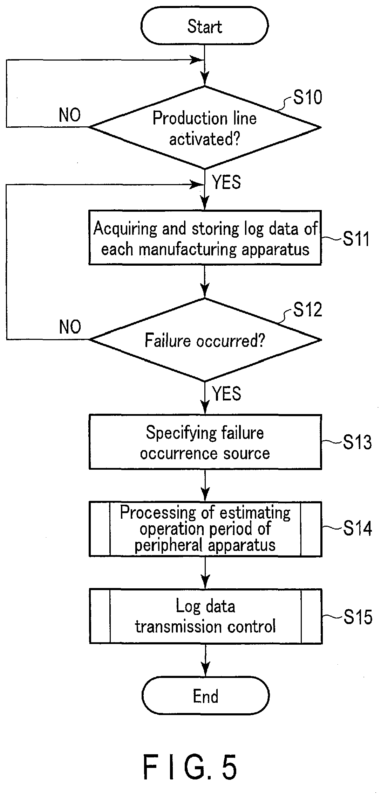

FIG. 5 is a flowchart showing an example of the overall processing procedure and processing contents of data distribution control operation by the production management device CT.

### (2-1) Management of Operation History

The control unit 1 of the production management apparatus CT monitors the activation of the production line LN in step S10 shown in FIG. 5. When the production line LN is activated in this state, each of the manufacturing apparatuses RB1, RB2, ..., starts to operate. Then, the operation states of the manufacturing apparatuses RB1, RB2, ... are respectively detected by the sensors, and chronological sensor data is output.

Under the control of the operation history management unit 11, in step S11, the control unit 1 of the production management apparatus CT receives sensor data chronologically output from the respective manufacturing apparatuses RB1, RB2, ..., via the communication I/F 4, associates each of the received pieces of sensor data with a corresponding occurrence time or reception time and with IDs of a manufacturing apparatus, which is a transmission source, and a corresponding sensor, and stores these pieces as log data in the operation history storage unit 31. Sensor data may be acquired through real-time processing or through batch processing in which sensor data is collectively acquired for a fixed amount of time.

### (2-2) Management of Failure Occurrence History

While the production line LN is in operation, under the control of the failure occurrence management unit 12, the control unit 1 of the production management apparatus CT monitors, in step S12, the generation of alarm data from the manufacturing apparatuses RB1, RB2, ....

In this state, for example, when a failure (including signs of failure) is detected in the manufacturing apparatus RB3 and alarm data is output accordingly, the failure occurrence management unit 12 receives the alarm data via the communication I/F 4. In step S13, the failure occurrence management unit 12 then determines a failure occurrence source based on the received alarm data. Subsequently, the failure occurrence management unit 12 notifies the operation period estimation unit 13 of the ID of the determined manufacturing apparatus serving as the failure occurrence source, together with a failure occurrence notification. At the same time, the ID of the manufacturing apparatus serving as the failure occurrence source is stored in the failure occurrence history storage unit 32 together with information indicating a failure occurrence location and information indicating a failure occurrence timing.

### (2-3) Processing of Estimating Operation Period of Peripheral Apparatus and Control of Log Data Transmission

Upon receipt of the failure occurrence notification, the control unit 1 of the production management apparatus CT first proceeds to step S14 to execute, under control of the operation period estimation unit 13, processing of estimating an operation period of a periphery apparatus having a relevance to the occurrence of the failure.

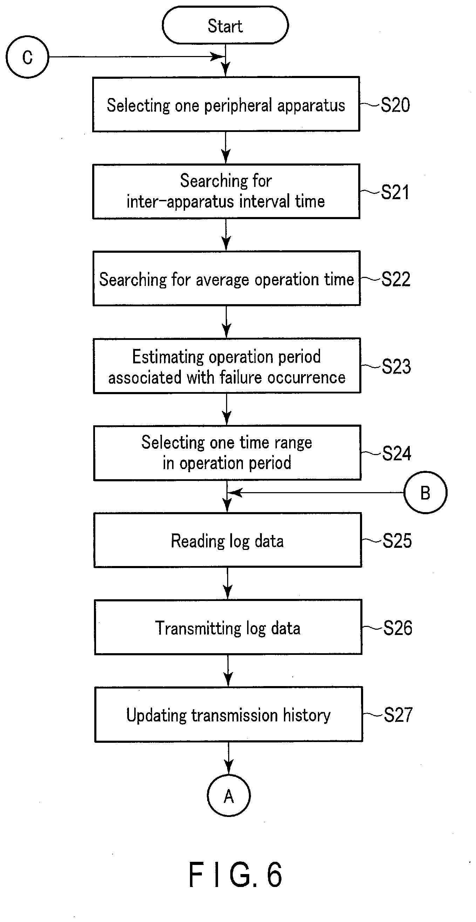

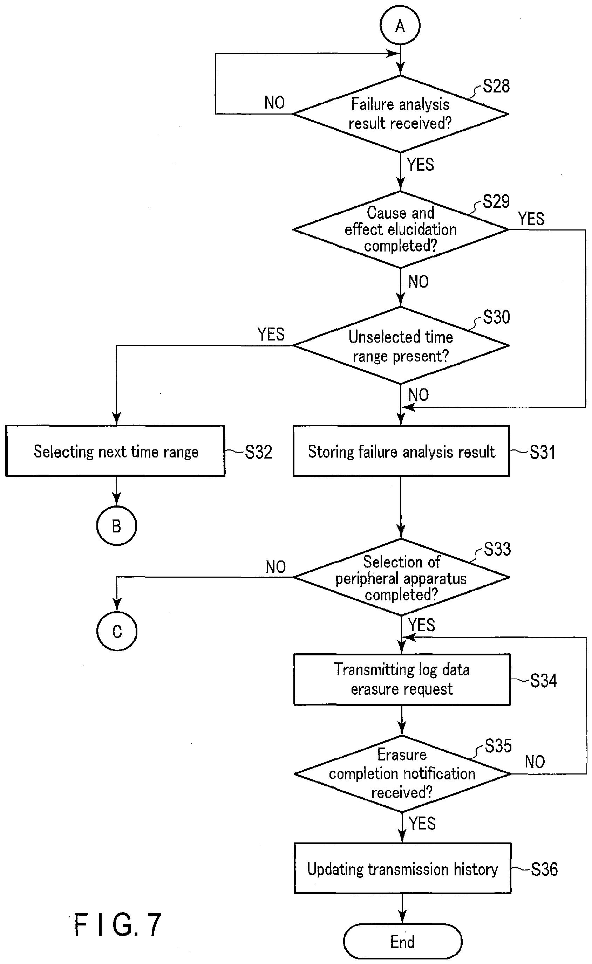

FIG. 6 and FIG. 7 are each a flowchart showing processing steps of estimating an operation period of a peripheral apparatus having a relevance to an occurrence of a failure, performed by the operation period estimation unit 13, together with steps of log data transmission control to be described later.

In step S20, first, the operation period estimation unit 13 selects one of the apparatuses located in the periphery of the manufacturing apparatus RB3 in which a failure has occurred. At this time, the operation period estimation unit 13 divides the peripheral apparatuses into the peripheral apparatuses RB2, RB1 located on the upstream side of the manufacturing apparatus RB3 in which the failure has occurred, and the peripheral apparatuses RB4, RB5 located on the downstream side. The operation period estimation unit 13 then selects the manufacturing apparatus RB2 on the upstream side first.

In the example described herein, all of the manufacturing apparatuses RB1, RB2, RB4, RB5, ..., except for the manufacturing apparatus RB3 on the production line LN are considered as peripheral apparatuses and are selected one after another. However, only a group of manufacturing apparatuses having an operational relevance to the manufacturing apparatus RB3 in which a failure has occurred may be considered as peripheral apparatuses and may be selected one after another. Whether an operational relevance is present or absent between manufacturing apparatuses can be set depending on whether or not an ID of a manufacturing apparatus is registered in a peripheral apparatus column in the inter-apparatus time difference information shown in FIG. 4.

When one periphery apparatus is selected, the operation period estimation unit 13 reads from the inter-apparatus time difference information storage unit 33, inter-apparatus interval times TL2-3 and TL1-2, and an average operation time TRB2 stored for the selected periphery apparatus RB2, respectively in step 21 and step S22. In step S23, the operation period estimation unit 13 estimates an operation period in which the manufacturing apparatus RB3 was affected by the periphery apparatus RB2, based on a failure occurrence timing notified by the failure occurrence management unit 12 and the read inter-apparatus interval times TL2-3 and TL1-2 and the average operation time TRB2.

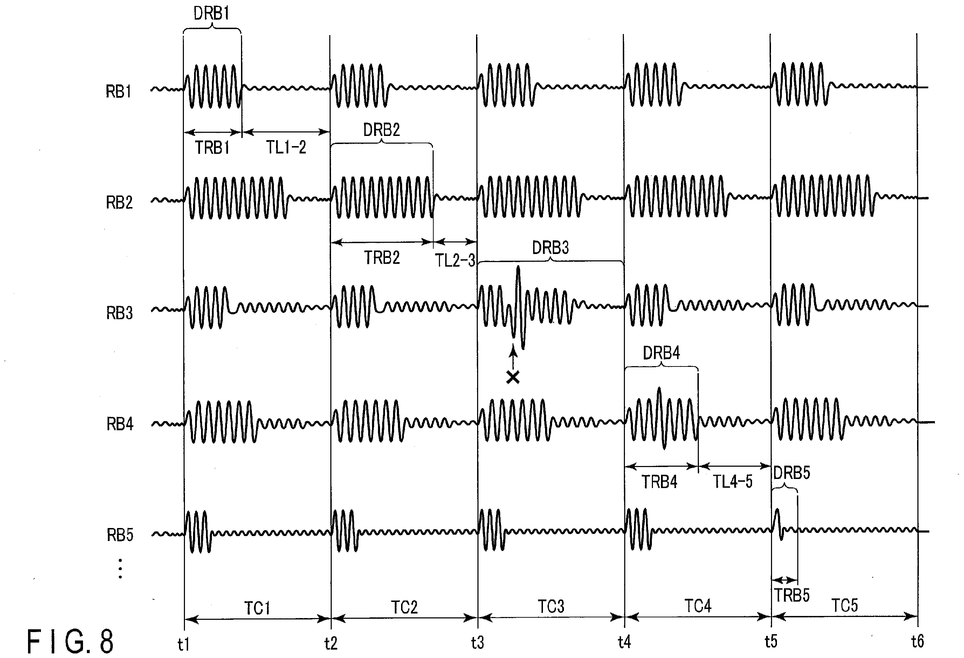

Hereinafter, a specific example of the above will be described. FIG. 8 is timing diagram for illustrating a specific example of estimation processing of the operation period described above.

This example assumes that in operation cycles TC1 to TC5 of the production line LN, sensor data chronically output from the manufacturing apparatuses RB1, RB2, ..., are stored in the operation history storage unit 31.

Herein, it is assumed that, for example, in the operation cycle TC3, a temporal failure (indicated by X in FIG. 8) occurs during assembling or processing work performed by the manufacturing apparatus RB3 with respect to a product. In this case, possible causes of the occurrence of the failure include a malfunction of the manufacturing apparatus RB3 itself and a deficiency in assembling or processing work performed by each of the manufacturing apparatuses RB2 and RB1 on the upstream side with respect to the product during the operation cycles TC2 and TC1.

The operation period estimation unit 13 first estimates, based on the failure occurrence timing notified by the failure occurrence management unit 12, the operation cycle TC3 in which the failure has occurred, and then estimates the operation period TRB2 of the peripheral apparatus RB2 in the operation cycle TC2 based on the inter-apparatus interval time TL2-3 between the manufacturing apparatus RB3 and the peripheral apparatus RB2 read from the inter-apparatus time difference information storage unit 33.

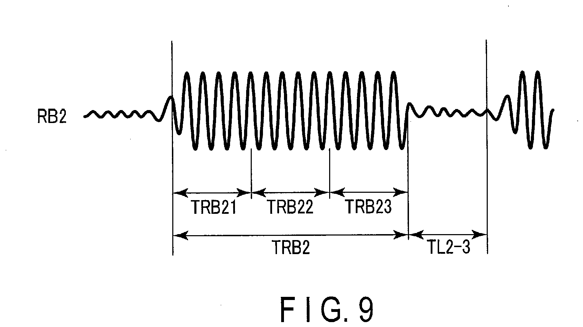

Next, in step S24, the operation period estimation unit 13 further divides the estimated operation period TRB2 into three time ranges TRB21, TRB22, and TRB23 as shown in FIG. 9, for example, and selects one of these time ranges. In this processing of selecting a time range, for example, in consideration of operation contents of assembling or processing work by the manufacturing apparatus RB2, for example, time ranges are selected in order from a time range including an operation content in which a failure is most likely to occur, for example, TRB23.

When the operation period TRB2 of the manufacturing apparatus RB2 and a corresponding time range TRB23 are selected, in step S25, the control unit 1 of the manufacturing management apparatus CT performs transmission control of log data in step S25 under control of the log data transmission control unit 14.

That is, the log data transmission control unit 14 reads from the operation history storage unit 31, log data DRB3 in the operation cycle TC3 of the manufacturing apparatus RB3 in which the failure has first occurred, and transmits the read log data of the manufacturing apparatus RB3 via the communication I/F 5 to the external center SC.

The log data transmission control unit 14 then selects log data DRB2 of the manufacturing apparatus RB2 corresponding to the operation period TRB2 estimated as described above, and further reads the log data DRB2 corresponding to the time range TRB23 from the operation history storage unit 31. In step S26, the log data transmission control unit 14 transmits the read log data from the communication I/F 5 to the external support center SC.

After transmitting each the log data, in step S27, the log data transmission control unit 14 stores in the log data transmission history storage unit 34 information indicating the manufacturing apparatus RB2 serving as a generation source of the log data DRB2 and a transmission period.

Next, under control of the operation period estimating unit 13, in step S28, the control unit 1 of the manufacturing management apparatus CT receives information indicating a failure analysis result that has been returned from the external support center SC. This information indicating a failure analysis result includes information indicating a failure occurrence cause with respect to the transmitted log data DRB3 of the manufacturing apparatus RB3 and the log data corresponding to the time range TRB23 during the operation period TRB2 of the periphery apparatus RB2. In step S29, the operation period estimation unit 13 determines whether a cause of failure occurrence has been elucidated or not based on the received information indicating the failure analysis result. As a result of this determination, if the cause is elucidated, the operation period estimation unit 13 shifts to step S31, thereby storing the information on the failure analysis result including the cause of failure occurrence in the failure occurrence history storage unit 32 and stopping the subsequent transmission of log data.

On the other hand, it is assumed that a cause of a failure is not elucidated in step S29 mentioned above. In this case, in step S30, the operation period estimation unit 13 determines whether or not any time range remains unselected in the operation period TRB2 of the manufacturing apparatus RB2. If any time range remains unselected, the next unselected time range (for example, TRB22) is selected in step S32, and the operation period estimation unit 13 returns to step S25. The log data transmission control unit 14 reads log data corresponding to the selected time range TRB22 from the operation history storage unit 31 in step S25, transmits this piece to the external support center SC in step S26, and stores information indicating this transmission history in the log data transmission history storage unit 34 in step S27.

After the log data corresponding to the time range TRB22 is transmitted, the operation period estimation unit 13 receives information indicating the failure analysis result from the external support center SC in steps S28 and S29, determines whether or not the failure cause has been elucidated based on the information, and stores the information in the failure occurrence history storage unit 32 in step S31 if the failure cause has been elucidated.

Similarly, if the cause of the failure is not elucidated even after the transmission of log data corresponding to the time range TRB22, the operation period estimation unit 13 selects the last unselected time range RB2 in the operation period TRB2 of the manufacturing apparatus TRB23, reads a corresponding log data from the operation history storage unit 31, and transmits the piece to the external support center SC. In steps S28 to S31, the operation period estimation unit 13 performs processing of: receiving information indicating a failure analysis result that has been returned from the external support center SC; and storing the received information indicating the failure analysis result in the failure occurrence history storage unit 32.

After processing of transmitting log data and processing of receiving/storing information indicating corresponding failure analysis results are completed for all of the time ranges in the operation period TRB2 of the manufacturing apparatus RB2, the operation period estimation unit 13 determines in step S33 whether or not log data transmission processing has been completed for all the peripheral apparatuses on the upstream side. As a result of this determination, in the case where there remains a peripheral apparatus whose log data has not been transmitted, the operation period estimation unit 13 returns to step S20 shown in FIG. 6.

When returning to step S20, the operation period estimation unit 13 selects the unselected peripheral apparatus RB1 on the upstream side. As in the processing on the peripheral apparatus RB2 described above, in steps S21 to S27, the operation period estimation unit 13 then performs, on the selected peripheral apparatus RB1, processing of estimating the operation period TRB1, the processing of dividing the operation period TRB1 into a plurality of time ranges, processing of reading and transmitting a corresponding log data for each of the divided time ranges, and processing of storing a transmission history.

After each transmission of the log data, the operation period estimation unit 13 executes processing of receiving information indicating a failure analysis result that has been returned from the external support center SC, processing of determining the content of the information, and processing of storing the failure analysis result.

After completing, with respect to all of the peripheral apparatuses RB2 and RB1 on the upstream side, a series of steps of the processing including estimation of the operation period associated with a failure, transmission of log data, and reception of a failure analysis result with respect to the log data, the operation period estimation unit 13 sequentially selects the peripheral apparatuses RB4, RB5, ..., positioned on the downstream side of the manufacturing apparatus RB3 in which the failure has occurred. The operation period estimation unit 13 then selects, for the selected peripheral apparatuses RB4, RB5, ..., on the downstream side, operation periods RB3 and TRB5 during which these apparatuses may be affected by a failure occurring in the manufacturing apparatus TRB4, respectively. The operation period estimation unit 13 further divides the operation periods TRB4 and TRB5 into a plurality of time ranges as necessary, reads a corresponding log data for each of the divided time ranges, and transmits the piece to the external support center SC.

After each transmission of the log data, the operation period estimation unit 13 further receives information indicating a failure analysis result from the external support center SC, and determines in step S29 whether or not there is an influence of the failure. The operation period estimation unit 13 then stores information indicating the failure analysis result including a result of the determination in the failure occurrence history storage unit 32.

### (2-4) Erasure of Transmitted Log Data

Suppose that failure analysis result information including information indicating that a failure occurrence cause has been elucidated is returned from the external support center SC or that transmission of log data is completed for all peripheral apparatuses defined in the inter-apparatus time difference information storage unit 33. In this case, in step S34, after designating a set of transmitted log data with respect to the external support center ST, the log data transmission control unit 14 transmits an erasure request of the set.

Upon receipt of the erasure request, the external support center SC batch-erases the log data stored for the analysis processing. After completion of the erasure, the external support center SC returns an erasure completion notification to the production management apparatus CT.

Under control of the log data transmission control unit 14, the control unit 1 of the production management apparatus CT monitors the return of the erasure completion notification in step S35. When the erasure completion notification is returned, in step S36, the erasure completion notification is additionally stored in a log data transmission history corresponding to a corresponding event number in the log data transmission history storage unit 34.

### (Action and Effect)

As described above, in an embodiment, information on a time difference in operation between the manufacturing apparatuses RB1, RB2, ..., arranged on the production line LN is stored for each of the apparatuses, in the inter-apparatus time difference information storage unit 33 in the production management apparatus CT. In this state, at the occurrence of a failure in one of the manufacturing apparatuses RB1, RB2, ..., among the peripheral apparatuses on the upstream side and the downstream side with respect to the manufacturing apparatus concerned, one on the upstream side and one on the downstream side are selected, an operation period of each selected peripheral apparatus, which is associated with the failure, is estimated, log data corresponding to the estimated operation period is read from the operation history storage unit 31, and the read piece is transmitted to the external support center SC.

Therefore, for each peripheral apparatus, only log data corresponding to the operation period associated with the occurrence of the failure is transmitted to the external support center SC, so that the confidentiality of log data can be maintained at a high level as compared to a case in which log data corresponding to operation periods of all peripheral apparatuses are unconditionally transmitted.

In an embodiment, when log data corresponding to the estimated operation period is transmitted, the operation period is divided into a plurality of time ranges, and log data is read and transmitted for each of the divided time ranges. This can further limit log data to be transmitted, thereby enabling further improvement in confidentiality of the log data.

Furthermore, while a manufacturing apparatus in which a failure has occurred is used as the reference, peripheral apparatuses are divided into those located on the upstream side and those located on the downstream side. For each of these peripheral apparatuses, an operation period associated with the failure is estimated, log data corresponding to this operational period is transmitted, and information indicating a failure analysis result is acquired. This makes it possible to make a determination for each peripheral apparatuses located on the upstream side as to whether it has affected an occurrence of a failure in a manufacturing apparatus and a determination for each peripheral apparatus located on the downstream side as to whether it has been affected by the occurrence of the failure in the manufacturing apparatus.

Furthermore, according to an embodiment, the log data transmission control unit 14 is configured to cause the external support center SC that has served as a transmission destination of the log data to erase log data by transmitting a log data erasure request thereto, for example, after reception of a failure analysis result, and to receive and manage an erasure completion notification in the log data transmission history storage unit 34. This makes it possible to prevent such a problem wherein transmitted log data is used for purposes other than failure analysis in the external support center SC or are transferred to a third party.

### (Other Embodiments)

The above embodiment described, as an example, a case in which distribution control of log data is performed in the production management device CT provided in the production facility MK. However, a similar data distribution control function may be provided in, for example, a support center, etc. This enables control to be performed in such a manner that a transfer destination of log data is further limited even in a case in which the external support center SC transfers the log data received from the production management apparatus CT to, for example, a component manufacturer or a software vendor.

Furthermore, the present invention is applicable to, in addition to a production facility, various other facilities such as a power generation facility, a power transmission and distribution facility, a physical distribution facility, and various inspection facilities.

### REFERENCE SIGNS LIST

- MK: Production facility
- CT: Production management apparatus
- LN: Production line
- RB1, RB2: Manufacturing apparatus
- NW1: LAN
- NW2: WAN
- SC: External support center
- 1: Control unit
- 2: Program storage unit
- 3: Data storage unit
- 4, 5: Communication I/F
- 6: Input/output I/F
- 7: Input unit
- 8: Display unit
- 9: Bus
- 11: Operation history management unit
- 12: Failure occurrence management unit
- 13: Operation period estimation unit
- 14: Log data transmission control unit
- 31: Operation history storage unit
- 32: Failure occurrence history storage unit
- 33: Inter-apparatus time difference information storage unit
- 34: Log data transmission history storage unit

## Claims

1. A data distribution control apparatus (CT) configured to transmit log data indicating an operation state of a facility (MK) including a plurality of apparatuses (RB1, RB2, RB3, RB4, RB5) to a data user via a network, the data distribution control apparatus comprising:
a first storage medium (33) configured to store time difference information in operation according to a positional relationship between the plurality of apparatuses (RB1, RB2, RB3, RB4, RB5);
a log data acquisition unit (11) configured to acquire log data indicating operation states of the plurality of apparatuses (RB1, RB2, RB3, RB4, RB5) and chronologically store log data in a second storage medium (31);
an estimation unit (13) configured to, at an occurrence of a failure in a first apparatus included in the plurality of apparatuses(RB1, RB2, RB3, RB4, RB5), estimate, based on an occurrence timing of the failure and the time difference information in operation, an operation period associated with the occurrence of the failure, of a second apparatus included in the plurality of apparatuses (RB1, RB2, RB3, RB4, RB5) and having an operational relevance to the first apparatus; and
a transmission control unit (14) configured to read from the second storage medium (31), as a distribution object, the log data corresponding to the estimated operation period from among log data indicating an operation state of the second apparatus, and transmit the read log data to the data user via the network.

2. The data distribution control apparatus (CT) according to claim 1, wherein in a case where the plurality of apparatuses are arranged on a production line, the estimation unit (13) is configured to select, as the second apparatus, an apparatus arranged on an upstream side of the first apparatus on the production line, and to estimate an operation period during which the selected second apparatus affects the occurrence of the failure based on the occurrence timing of the failure and the time difference information in operation.

3. The data distribution control apparatus (CT) according to claim 1, wherein in a case where the plurality of apparatuses are arranged on the production line, the estimation unit (13) is configured to select, as the second apparatus, an apparatus arranged on a downstream side of the first apparatus on the production line, and to estimate an operation period during which the selected second apparatus is affected by the occurrence of the failure based on the occurrence timing of the failure and the time difference information in operation.

4. The data distribution control apparatus (CT) according to any one of claims 1 to 3, wherein the estimation unit (13) is configured to further divide the estimated operation period into a plurality of time ranges and sequentially select the divided time ranges in descending order of degree of relevance to the occurrence of the failure, and
the transmission control unit (14) is configured to transmit, for each of the selected time ranges, log data corresponding to the time range concerned, as the distribution object.

5. The data distribution control apparatus (CT) according to claim 4, further comprising an acquisition unit (13) configured to acquire information indicating an analysis result of the failure from the data user who is a transmission destination of the log data, wherein the estimation unit is configured to sequentially select the divided time ranges in descending order of a degree of relevance to the occurrence of the failure, based on the acquired information indicating the analysis result.

6. The data distribution control apparatus (CT) according to any one of claims 1 to 5, wherein the transmission control unit (14) is configured to further perform processing of erasing the log data stored by the data user after a preset time has elapsed since the log data is transmitted to the data user.

7. A data distribution control method that is executed by a control apparatus (CT) configured to transmit log data indicating an operation state of a facility (MK) including a plurality of apparatuses (RB1, RB2, RB3, RB4, RB5) to a data user via a network, the data distribution control method comprising:
storing time difference information in operation according to a positional relationship between the plurality of apparatus in a first storage medium;
acquiring log data respectively indicating operation states of the plurality of apparatuses and chronologically storing log data in a second storage medium;
at an occurrence of a failure in a first apparatus included in the plurality of apparatuses, estimating, based on an occurrence timing of the failure and the time difference information in operation, an operation period associated with the occurrence of the failure, of a second apparatus included in the plurality of apparatuses and having an operational relevance to the first apparatus; and
reading from the second storage medium, as a distribution object, the log data corresponding to the estimated operation period from among log data indicating an operation state of the second apparatus, and transmitting the read log data to the data user via the network.

8. A computer program comprising instructions which, when executed by a control apparatus (CT), cause the control apparatus (CT) to carry out the method of claim 7.

## Patentansprüche

1. Datenverteilungssteuervorrichtung (CT), die so konfiguriert ist, dass sie Protokolldaten, die einen Betriebszustand einer Einrichtung (MK) anzeigen, die eine Vielzahl von Vorrichtungen (RB1, RB2, RB3, RB4, RB5) enthält, an einen Datenbenutzer über ein Netzwerk überträgt, wobei die Datenverteilungssteuervorrichtung Folgendes umfasst:
ein erstes Speichermedium (33), das so konfiguriert ist, dass es Zeitdifferenzinformationen im Betrieb gemäß einer Positionsbeziehung zwischen der Vielzahl von Vorrichtungen (RB1, RB2, RB3, RB4, RB5) speichert;
eine Protokolldatenerfassungseinheit (11), die so konfiguriert ist, dass sie Protokolldaten erfasst, die Betriebszustände der Vielzahl von Vorrichtungen (RB1, RB2, RB3, RB4, RB5) anzeigen, und Protokolldaten in einem zweiten Speichermedium (31) chronologisch speichert;
eine Schätzeinheit (13), die so konfiguriert ist, dass sie beim Auftreten eines Fehlers in einer ersten Vorrichtung, die in der Vielzahl von Vorrichtungen (RB1, RB2, RB3, RB4, RB5) enthalten ist, basierend auf einem Zeitpunkt des Auftretens des Fehlers und den Zeitdifferenzinformationen im Betrieb einen mit dem Auftreten des Fehlers assoziierten Betriebszeitraum einer zweiten Vorrichtung schätzt, die in der Vielzahl von Vorrichtungen (RB1, RB2, RB3, RB4, RB5) enthalten ist und eine operative Relevanz für die erste Vorrichtung hat; und
eine Übertragungssteuereinheit (14), die so konfiguriert ist, dass sie aus dem zweiten Speichermedium (31) als Verteilungsobjekt die Protokolldaten, die dem geschätzten Betriebszeitraum entsprechen, aus Protokolldaten liest, die einen Betriebszustand der zweiten Vorrichtung anzeigen, und die gelesenen Protokolldaten über das Netzwerk an den Datenbenutzer überträgt.

2. Datenverteilungssteuervorrichtung (CT) nach Anspruch 1, wobei in einem Fall, in dem die Vielzahl von Vorrichtungen auf einer Produktionslinie angeordnet sind, die Schätzeinheit (13) so konfiguriert ist, dass sie als zweite Vorrichtung eine Vorrichtung auswählt, die auf einer stromaufwärtigen Seite der ersten Vorrichtung auf der Produktionslinie angeordnet ist, und einen Betriebszeitraum, während dem die ausgewählte zweite Vorrichtung das Auftreten des Fehlers beeinflusst, basierend auf dem Zeitpunkt des Auftretens des Fehlers und den Zeitdifferenzinformationen im Betrieb schätzt.

3. Datenverteilungssteuervorrichtung (CT) nach Anspruch 1, wobei in einem Fall, in dem die Vielzahl von Vorrichtungen auf der Produktionslinie angeordnet sind, die Schätzeinheit (13) so konfiguriert ist, dass sie als zweite Vorrichtung eine Vorrichtung auswählt, die auf einer stromabwärtigen Seite der ersten Vorrichtung auf der Produktionslinie angeordnet ist, und einen Betriebszeitraum, während dem die ausgewählte zweite Vorrichtung von dem Auftreten des Fehlers beeinflusst wird, basierend auf dem Zeitpunkt des Auftretens des Fehlers und den Zeitdifferenzinformationen im Betrieb schätzt.

4. Datenverteilungssteuervorrichtung (CT) nach einem der Ansprüche 1 bis 3, wobei die Schätzeinheit (13) so konfiguriert ist, dass sie den geschätzten Betriebszeitraum ferner in eine Vielzahl von Zeitbereichen unterteilt und die unterteilten Zeitbereiche in absteigender Reihenfolge des Grades der Relevanz für das Auftreten des Fehlers sequentiell auswählt, und
wobei die Übertragungssteuereinheit (14) so konfiguriert ist, dass sie für jeden der ausgewählten Zeitbereiche Protokolldaten, die dem betreffenden Zeitbereich entsprechen, als Verteilungsobjekt überträgt.

5. Datenverteilungssteuervorrichtung (CT) nach Anspruch 4, die ferner eine Erfassungseinheit (13) umfasst, die so konfiguriert ist, dass sie Informationen, die ein Analyseergebnis des Fehlers anzeigen, von dem Datenbenutzer erfasst, der ein Übertragungsziel der Protokolldaten ist, wobei die Schätzeinheit so konfiguriert ist, dass sie die unterteilten Zeitbereiche in absteigender Reihenfolge eines Grades der Relevanz für das Auftreten des Fehlers basierend auf den erfassten Informationen sequentiell auswählt, die das Analyseergebnis anzeigen.

6. Datenverteilungssteuervorrichtung (CT) nach einem der Ansprüche 1 bis 5, wobei die Übertragungssteuereinheit (14) so konfiguriert ist, dass sie ferner das Verarbeiten zum Löschen der von dem Datenbenutzer gespeicherten Protokolldaten ausführt, nachdem eine voreingestellte Zeit seit der Übertragung der Protokolldaten an den Datenbenutzer verstrichen ist.

7. Datenverteilungssteuerverfahren, das von einer Steuervorrichtung (CT) ausgeführt wird, die so konfiguriert ist, dass sie Protokolldaten, die einen Betriebszustand einer Einrichtung (MK) anzeigen, die eine Vielzahl von Vorrichtungen (RB1, RB2, RB3, RB4, RB5) enthält, über ein Netzwerk an einen Datenbenutzer überträgt, wobei das Datenverteilungssteuerverfahren Folgendes umfasst:
Speichern von Zeitdifferenzinformationen im Betrieb gemäß einer Positionsbeziehung zwischen der Vielzahl von Vorrichtungen in einem ersten Speichermedium;
Erfassen von Protokolldaten, die jeweils Betriebszustände der Vielzahl von Vorrichtungen anzeigen, und chronologisches Speichern von Protokolldaten in einem zweiten Speichermedium;
beim Auftreten eines Fehlers in einer ersten Vorrichtung, die in der Vielzahl von Vorrichtungen enthalten ist, Schätzen, basierend auf einem Zeitpunkt des Auftretens des Fehlers und den Zeitdifferenzinformationen im Betrieb, eines Betriebszeitraums, der mit dem Auftreten des Fehlers assoziiert ist, einer zweiten Vorrichtung, die in der Vielzahl von Vorrichtungen enthalten ist und eine operative Relevanz für die erste Vorrichtung hat; und
Lesen der Protokolldaten, die dem geschätzten Betriebszeitraum entsprechen, aus Protokolldaten, die einen Betriebszustand der zweiten Vorrichtung anzeigen, aus dem zweiten Speichermedium als ein Verteilungsobjekt und Übertragen der gelesenen Protokolldaten über das Netzwerk an den Datenbenutzer.

8. Computerprogramm, das Anweisungen umfasst, die, wenn sie von einer Steuervorrichtung (CT) ausgeführt werden, die Steuervorrichtung (CT) veranlassen, das Verfahren nach Anspruch 7 auszuführen.

## Revendications

1. Appareil de commande de distribution de données (CT) configuré pour transmettre des données de journal indiquant un état de fonctionnement d'une installation (MK) incluant une pluralité d'appareils (RB1, RB2, RB3, RB4, RB5) à un utilisateur des données via un réseau, l'appareil de commande de distribution de données comprenant :
un premier support de stockage (33) configuré pour stocker des informations de différence de temps en fonctionnement selon une relation de position entre la pluralité d'appareils (RB1, RB2, RB3, RB4, RB5) ;
une unité d'acquisition de données de journal (11) configurée pour acquérir des données de journal indiquant des états de fonctionnement de la pluralité d'appareils (RB1, RB2, RB3, RB4, RB5) et stocker chronologiquement des données de journal dans un deuxième support de stockage (31) ;
une unité d'estimation (13) configurée pour, lors d'une occurrence d'une défaillance dans un premier appareil inclus dans la pluralité d'appareils (RB1, RB2, RB3, RB4, RB5), estimer, sur la base d'une temporisation d'occurrence de la défaillance et des informations de différence de temps en fonctionnement, une période de fonctionnement associée à l'occurrence de la défaillance, d'un deuxième appareil inclus dans la pluralité d'appareils (RB1, RE2, RE3, RB4, RB5) et ayant une pertinence opérationnelle au premier appareil ; et
une unité de commande de transmission (14) configurée pour lire du deuxième support de stockage (31), en tant qu'objet de distribution, les données de journal correspondant à la période de fonctionnement estimée parmi des données de journal indiquant un état de fonctionnement du deuxième appareil, et transmettre les données de journal lues à l'utilisateur des données via le réseau.

2. Appareil de commande de distribution de données (CT) selon la revendication 1, où dans un cas où la pluralité d'appareils est disposée sur une ligne de production, l'unité d'estimation (13) est configurée pour sélectionner, en tant que deuxième appareil, un appareil disposé sur un côté en amont du premier appareil sur la ligne de production, et pour estimer une période de fonctionnement pendant laquelle le deuxième appareil sélectionné affecte l'occurrence de la défaillance sur la base de la temporisation d'occurrence de la défaillance et des informations de différence de temps en fonctionnement.

3. Appareil de commande de distribution de données (CT) selon la revendication 1, où dans un cas où la pluralité d'appareils est disposée sur la ligne de production, l'unité d'estimation (13) est configurée pour sélectionner, en tant que deuxième appareil, un appareil disposé sur un côté en aval du premier appareil sur la ligne de production, et pour estimer une période de fonctionnement pendant laquelle le deuxième appareil sélectionné est affecté par l'occurrence de la défaillance sur la base de la temporisation d'occurrence de la défaillance et des informations de différence de temps en fonctionnement.

4. Appareil de commande de distribution de données (CT) selon l'une quelconque des revendications 1 à 3, où l'unité d'estimation (13) est configurée pour diviser en outre la période de fonctionnement estimée dans une pluralité de plages de temps et sélectionner séquentiellement les plages de temps divisées en ordre décroissant de degré de pertinence par rapport à l'occurrence de la défaillance, et
l'unité de commande de transmission (14) est configurée pour transmettre, pour chacune des plages de temps sélectionnées, des données de journal correspondant à la plage de temps concernée, en tant qu'objet de distribution.

5. Appareil de commande de distribution de données (CT) selon la revendication 4, comprenant en outre une unité d'acquisition (13) configurée pour acquérir des informations indiquant un résultat d'analyse de la défaillance de l'utilisateur des données qui est une destination de transmission des données de journal, où l'unité d'estimation est configurée pour sélectionner séquentiellement les plages de temps divisées en ordre décroissant d'un degré de pertinence par rapport à l'occurrence de la défaillance, sur la base des informations acquises indiquant le résultat d'analyse.

6. Appareil de commande de distribution de données (CT) selon l'une quelconque des revendications 1 à 5, où l'unité de commande de transmission (14) est configurée pour effectuer en outre un traitement d'effacement des données de journal stockées par l'utilisateur des données après qu'un temps prédéfini se soit écoulé depuis que les données de journal sont transmises à l'utilisateur des données.

7. Procédé de commande de distribution de données qui est exécuté par un appareil de commande (CT) configuré pour transmettre des données de journal indiquant un état de fonctionnement d'une installation (MK) incluant une pluralité d'appareils (RE1, RB2, RB3, RB4, RB5) à un utilisateur des données via un réseau, le procédé de commande de distribution de données comprenant :
stocker des informations de différence de temps en fonctionnement selon une relation de position entre la pluralité d'appareils dans un premier support de stockage ;
acquérir des données de journal indiquant respectivement des états de fonctionnement de la pluralité d'appareils et stocker chronologiquement des données de journal dans un deuxième support de stockage ;
lors d'une occurrence d'une défaillance dans un premier appareil inclus dans la pluralité d'appareils, estimer, sur la base d'une temporisation d'occurrence de la défaillance et des informations de différence de temps en fonctionnement, une période de fonctionnement associée à l'occurrence de la défaillance, d'un deuxième appareil inclus dans la pluralité d'appareils et ayant une pertinence opérationnelle au premier appareil ; et
lire du deuxième support de stockage, en tant qu'objet de distribution, les données de journal correspondant à la période de fonctionnement estimée parmi des données de journal indiquant un état de fonctionnement du deuxième appareil, et transmettre les données de journal lues à l'utilisateur des données via le réseau.

8. Programme informatique comprenant des instructions qui, lorsqu'elles sont exécutées par un appareil de commande (CT), amènent l'appareil de commande (CT) à réaliser le procédé selon la revendication 7.
